# EUROPÄISCHE PATENTSCHRIFT

(11) **EP 0 405 083 B1**
(45) Veröffentlichungstag und Bekanntmachung des Hinweises auf die Patenterteilung: **25.08.1993**
(21) Anmeldenummer: 90107602.6
(22) Anmeldetag: 21.04.1990
(51) Int. Cl.: F16C 13/00, B21B 27/02, D06C 15/08

(54) **Endquerdichtung für eine durchbiegungssteuerbare Walze**
End cross seal for controllable deflection roller
Etanchement transversal final pour un rouleau de flexion gouvernable

(30) Priorität: 13.06.1989 DE 3919208
(43) Veröffentlichungstag der Anmeldung: 02.01.1991
(73) Patentinhaber: Eduard Küsters Maschinenfabrik GmbH & Co. KG, 47805 Krefeld (DE)
(72) Erfinder: Küsters, Karl-Heinz, D-4150 Krefeld (DE); Schrörs, Günter, D-4154 Tönisvorst 1 (DE)
(74) Vertreter: Palgen, Peter, Dr. Dipl.-Phys.

(56) Entgegenhaltungen:
- DE-A- 2 025 777
- DE-C- 3 128 140
- DE-C- 3 843 434
- JP-Y-62 017 520

## Beschreibung

Die Erfindung bezieht sich auf eine Endquerdichtung der dem Oberbegriff des Anspruchs 1 entsprechenden Art.

Eine solche Endquerdichtung dient dazu, den Zwischenraum zwischen der anlaufenden Hohlwalze und dem feststehenden Querhaupt in Achsrichtung nach außen gegen einen Innendruck abzudichten. Der Innendruck kann zustande kommen, wenn die hydraulische Stützeinrichtung aus einer mit Druckflüssigkeit gefüllten halbzylinderschalenförmigen Kammer besteht, die durch die Endquerdichtungen und zu beiden Seiten des Querhaupts angebrachte Längsdichtungen von dem übrigen Zwischenraum abgeteilt ist, wie es bei der dem Oberbegriff zugrundeliegenden JP-Y-62-17520 der Fall ist. Eine ähnliche Endquerdichtung ist auch in der DE- 20 25 777 wiedergegeben. In den vorgenannten Fällen, in denen die Endquerdichtung eine durch Längsdichtungen abgeteilte halbzylinderschalenförmige sogenannte S-Walzenkammer begrenzt, erstreckt sich die Endquerdichtung über etwa 180° in Umfangsrichtung. Dies gilt auch für den Fall der DE-A-30 03 395, in der der Druck in der S-Walzenkammer durch Dichtungsglieder modifiziert wird, die Zonen niedrigeren Drucks aussparen.

Es gibt aber auch Fälle, in denen der gesamte Zwischenraum zwischen Hohlwalze und Querhaupt über 360° mit Druckflüssigkeit ausgefüllt ist, wie es in der DE-A-36 40 902 dargestellt ist. In diesen Fällen erstreckt sich natürlich auch die Endquerdichtung über 360°.

In vielen Fällen beträgt der Druck, gegen den die Endquerdichtung abdichten soll, mehrere 10 bar. Die Umfangsgeschwindigkeit an den aneinander anliegenden Gleitflächen kann bis zu 1000 m/min betragen, und es kann schließlich die hydraulische Druckflüssigkeit eine Temperatur von 250° C oder mehr aufweisen. Es wurde gefunden, daß unter diesen erschwerten Bedingungen die Druckflüssigkeit auf der Druckseite die Tendenz hat, den Gleitring radial von außen zu unterwandern und von dem feststehenden Gegenring abzuheben, wodurch die Dichtwirkung naturgemäß beeinträchtigt wird.

Der Erfindung liegt die Aufgabe zugrunde, diese Erscheinung zu unterdrücken. Diese Aufgabe wird durch die in Anspruch 1 wiedergegebene Erfindung gelöst.

Es ist hierdurch erreicht, daß die an der Gleitfläche von der Druckseite her radial von außen eingedrungenen Flüssigkeitsmengen sogleich zu Niederdruckseite abgeleitet werden und sich in der Gleitfläche kein abhebender Druck mehr aufbauen kann. Der Gleitring liegt zu beiden Seiten der Kammer, die zur Entlastung des unter dem hohen Druck auf der Überdruckseite gegen die Gleitfläche angepreßten Gleitrings dient, einwandfrei an und vermag so seine Dichtfunktion einwandfrei auszuüben.

Der Gleitring kann im einzelnen in der aus Anspruch 2 entnehmbaren Weise ausgebildet und abgedichtet sein. Es wurde gefunden, daß sich auf diese Weise eine einwandreie Abdichtung des Gleitrings gegen das Querhaupt, demgegenüber er ja bei Durchbiegungen der Hohlwalze und insbesondere des Querhaupts verlagerbar sein muß, zu erzielen ist.

Der gegen den Ansatz des Gleitrings von innen anliegende Ring kann insbesonders aus Polytetrafluoräthylen bestehen, weil dies ein gleitgünstiges und gleichzeitig noch in einem gewissen Grade anschmiegsames Material ist.

Die Verbindung der Nut mit der Niederdruckseite kann bei dieser Ausführungsform gemäß Anspruch 4 durch einen Kanal gebildet sein, der im wesentlichen axial durch den Gleitring hindurchführt, im allgemeinen also durch eine entsprechende Bohrung.

Wenn die Kammer in Umfangsrichtung in mehrere Einzelkammern unterteilt ist und dazwischen Zwischenräume verbleiben, besteht eine andere Möglichkeit, eine Verbindung der Nut mit der Niederdruckseite herzustellen, in der in Anspruch 5 wiedergegebenen Gestaltung.

Radial von einer Nut einer Endquerdichtung nach innen führende Kanäle sind für sich genommen aus der zum Stand der Technik gehörenden, jedoch nicht vorveröffentlichten DE-A-38 13 596 bekannt. Hierbei handelt es sich aber nicht um eine Gleitringdichtung, bei der eine axiale Anpressung stattfindet. Die aus der DE-A-38 13 596 bekannte Dichtung wird vielmehr hydraulisch radial gegen den Innenumfang der Hohlwalze angepreßt, und die radialen Kanäle dienen dazu, den für eine hydraulische Entlastung der Gleitflächen notwendigen Druck abzuzweigen.

In der Zeichnung sind Ausführungsbeispiele der Erfindung dargestellt.
Fig. 1 zeigt einen Teillängsschnitt durch das rechte Ende einer durchbiegungssteuerbaren Walze mit der erfindungsgemäßen Endquerdichtung;
Fig. 2 zeigt eine Teilansicht eines über 180° gehenden Bereichs der Endquerdichtung gemäß der Linie II-II in Fig. 1;
Fig. 3 und 4 zeigen Schnittansichten nach den Linien III-III und IV-IV in Fig. 2.

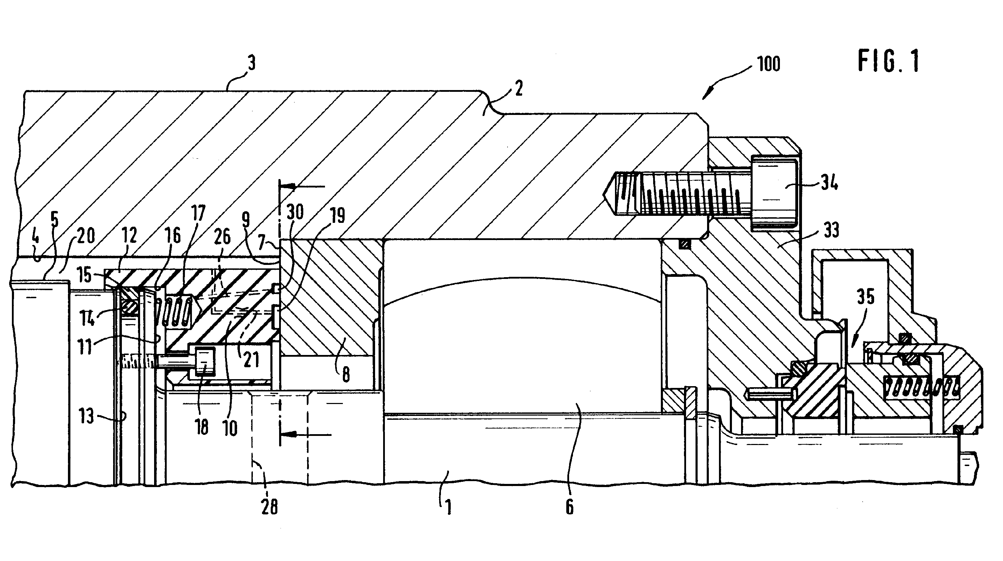

Die in Fig. 1 als Ganzes mit 100 bezeichnete Walze umfaßt ein undrehbares Querhaupt 1, um welches eine Hohlwalze 2 umläuft, die den arbeitenden Walzenumfang 3 bildet und die mit ihrem Innenumfang 4 Abstand von dem Außenumfang 5 des Querhauptes beläßt. Die Hohlwalze 2 ist an den Enden über Pendelrollenlager 6 auf dem Querhaupt 1 gelagert. Zwischen dem Pendelrollenlager 6 und einer Stufe 7 am Innenumfang 4 der Hohlwalze 2 ist ein Gegenring 8 eingespannt, der mit der Hohlwalze 2 umläuft, das Querhaupt 1 umgibt und an der nach innen gewandten Seite eine zur Achse der Hohlwalze 2 senkrechte Gleitfläche 9 darbietet, gegen die ein am Querhaupt 1 abgestützter, gegenüber diesem in einem gewissen Rahmen beweglicher,ansonsten aber feststehender Gleitring 10 dichtend anliegt.

Der Gleitring 10 hat einen im wesentlichen rechteckigen Querschnitt und ist vor einer Durchmesserstufe 11 des Querhauptes angeordnet. Er übergreift mit einem außen vorgesehenen axialen Ansatz 12 die Durchmesserstufe 11. In dem Bereich, in dem der Ansatz 12 die Durchmesserstufe 11 übergreift, ist in dieser eine radial nach außen offene Umfangsnut 13 angebracht, auf deren Grund ein O-Ring 14 und darüber ein Ring 15 von im wesentlichen rechteckigem Querschnitt aus Polytetrafluoräthylen angeordnet sind. Der Ring 15 liegt mit seiner Außenseite dichtend am Innenumfang 16 des Ansatzes 12 an. Zwischen dem Innenumfang 16 und dem benachbarten Außenumfang des Querhauptes 1 besteht ein geringes Spiel, so daß sich der Gleitring 10 gegenüber dem Querhaupt 1 etwas verlagern kann, um der Durchbiegung des Querhaupts 1 bei Belastung der Walze 100 Rechnung zu tragen.

Der Gleitring 10 wird durch axiale, sich vor die Durchmesserstufe 11 legende Schraubendruckfedern 17 gegen den Gegenring 8 angedrückt und durch über den Umfang verteilte Schrauben 18 an einer Drehung gehindert.

Auf der der Gleitfläche 9 zugewandten Seite weist der Gleitring 10 mehrere, zusammen fast den ganzen Umfang einnehmende Kammern 19 auf, die mit dem einen hohen Druck führenden Zwischenraum 20 zwischen dem Innenumfang 4 der Hohlwalze 2 und dem Außenumfang 5 des Querhauptes 1 über jeweils einen in Fig. 1 nur schematisch angedeuteten gedrosselten Kanal 21 in Verbindung stehen.

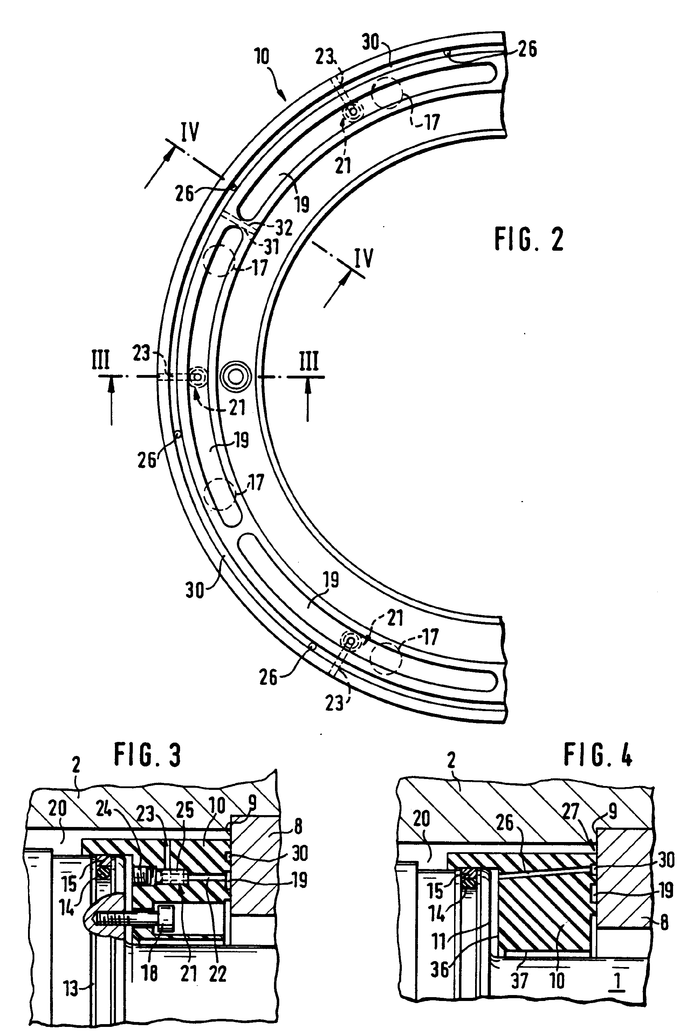

Die Ausführung im einzelnen ist aus den Fig. 2 und 3 ersichtlich. Der Kanal 21 besteht aus einer in Achsrichtung verlaufenden Bohrung 22, die in die Kammer 19 mündet und am anderen Ende durch einen Stopfen 24 verschlossen ist. Zwischen dem Stopfen 24 und der Kammer 19 ist eine radiale Bohrung 23 angebracht, die mit dem unter Druck stehenden Zwischenraum 20 in Verbindung steht und die Druckflüssigkeit heranführt, die durch einen in der Bohrung 22 angebrachten Drosseleinsatz 25 gedrosselt in die Kammer 19 übertritt.

Wie aus Fig. 2 ersichtlich ist, sind in dem Ausführungsbeispiel sechs über den Umfang verteilte Kammern 19 vorhanden, die durch jeweils einen Kanal 21 mit dem Zwischenraum 20 in Verbindung stehen.

Radial außerhalb der Kammern 19 ist in einer der Gleitfläche 9 zugewandten Stirnfläche des Gleitringes 10 nahe dem äußeren Rand der Gleitfläche 9 und nur wenige Millimeter von diesem entfernt eine über 360° durchgehende schmale Nut 30 von beispielsweise 3 mm Tiefe und Breite angebracht, die über einen oder mehrere in Fig. 1 nur angedeutete und in Fig. 4 im einzelnen ersichtliche Kanäle 26 mit der Niederdruckseite in Verbindung steht, d.h. in dem Ausführungsbeispiel mit der der Gleitfläche 9 abgelegenen anderen Stirnseite 36 des Gleitrings 10, die von dem den hohen Druck führenden Zwischenraum 20 durch das Dichtungsringpaar 14,15 getrennt ist. Die Stirnfläche 36 hat axialen Abstand von der Durchmesserstufe 11. Ebenso hat der Innenumfang 37 des Gleitrings 10 radialen Abstand von dem benachbarten Bereich des Querhaupts 1. Durch den Kanal 26 übertretende Druckflüssigkeit kann also durch diese Abstandsräume abströmen. Auf diese Weise wird an der Stelle 27 in Fig. 4 unter dem hohen Druck in den Zwischenraum 20 eindringende Druckflüssigkeit sogleich abgeleitet, bevor sie den Gleitring 10 von der Gleitfläche 9 abheben kann, wodurch die einwandfreie Dicht- und Gleitwirkung am dem Gleitring 10 im Bereich der Kammern 19 unbeeinträchtigt bleibt.

Die an der Gleitfläche 9 und an der Dichtung 15 aus dem unter hohem Druck stehenden Zwischenraum 20 übergetretene Leckageflüssigkeit kann durch einen Kanal 28 abgesaugt werden.

In Fig. 2 ist eine Alternative zu den Kanälen 26 angedeutet, die allerdings nur möglich ist, wenn die Kammer 19 nicht über den Umfang durchgeht, sondern einzelne Kammern 19 vorhanden sind, die jeweils nur ein Segment des Umfangs einnehmen und zwischen sich einen Abstandsraum 31 belassen. Durch diesen Abstandsraum kann eine radiale Nut 32, die gegen die Gleitfläche 9 hin offen ist, von der Umfangsnut 30 ausgehend bis nach innen durchgeführt sein, die ebenfalls den Druck in der Nut 30 abzubauen in der Lage ist, indem sie einen Zugang zur Niederdruckseite schafft. Die benachbarten Kammern 19 dürfen aber nicht angeschnitten werden, d.h. sie müssen in der Gleitebene 9 in allen Richtungen geschlossen sein, da sie sonst ihre Funktion nicht ausüben können.

Die Hohlwalze 2 ist am Ende durch einen Deckel 33 abgeschlossen, der mittels Schrauben 34 mit der Hohlwalze 2 verbunden ist. Der Deckel 33, der mit der Hohlwalze 2 umläuft, ist gegenüber dem Querhaupt 1 durch eine weitere Gleitringdichtung 35 abgedichtet, die aber nicht gegen besonders hohen Druck abdichten muß, sondern nur den Austritt von Druckflüssigkeit aus der Walze verhindern soll.

## Patentansprüche

1. Endquerdichtung für eine durchbiegungssteuerbare Walze (100)
mit einer den arbeitenden Walzenumfang (3) bildenden umlaufenden Hohlwalze (2) und einem diese der Länge nach durchgreifenden, rundum Abstand vom Innenumfang (4) der Hohlwalze (2) belassenden undrehbaren Querhaupt (1)
und mit einer gegen den Innenumfang (4) der Hohlwalze (2) wirkenden, am Querhaupt (1) angeordneten hydraulischen Stützeinrichtung,
wobei die Endquerdichtung (8,10) jeweils an einem Ende der Hohlwalze (2) angeordnet ist und den Zwischenraum (20) zwischen Hohlwalze (2) und Querhaupt (1) gegen den dort herrschenden Druck nach außen abdichtet
und durch eine Gleitringdichtung gebildet ist, deren in einer zur Achse der Walze (100) senkrechten Ebene angeordneter, in Richtung der Achse beweglicher Gleitring (10) mindestens eine gegen eine mit der Hohlwalze (2) umlaufende, nach innen gewandte Gleitfläche (9) offene, in Umfangsrichtung verlaufende, in jeder zu der zur Achse der Walze (100) senkrechten Ebene parallelen Richtung geschlossene Kammer (19) aufweist, zu der Druckflüssigkeit aus dem Zwischenraum (20) zwischen Hohlwalze (2) und Querhaupt (1) Zutritt hat,
dadurch gekennzeichnet,
daß im Gleitring (10) radial außerhalb der Kammer (19) eine über die Erstreckung der Endquerdichtung (8,10) in Umfangsrichtung verlaufende, gegen die Gleitfläche (9) offene Nut (30) vorgesehen ist, die mit der Niederdruckseite in Verbindung steht.

2. Endquerdichtung nach Anspruch 1, dadurch gekennzeichnet, daß der Gleitring (10) mit einem äußeren axialen, geschlossen umlaufenden Ansatz (12) eine Durchmesserstufe (11) des Querhaupts (1) übergreift und unter dem Ansatz (12) eine Umfangsnut (13) des Querhaupts (1), auf deren Grund ein O-Ring (14) und darüber ein die Nut (13) in der Breite ausfüllender und gegen den Innenumfang (16) des Ansatzes (12) dicht anliegender Ring (15) aus einem gleitgünstigen Material angeordnet sind.

3. Endquerdichtung nach Anspruch 2, dadurch gekennzeichnet, daß der Ring (15) aus Polytetrafluoräthylen besteht.

4. Endquerdichtung nach Anspruch 2 oder 3, dadurch gekennzeichnet, daß der Gleitring (10) mit seiner der Gleitfläche (9) abgelegenen Stirnseite (36) axialen Abstand von der Durchmesserstufe (11) und mit seinem Innenumfang (37) radialen Abstand von dem benachbarten Bereich des Querhaupts (1) beläßt und ein Kanal (26) von der Nut (30) zu der der Durchmesserstufe (11) zugewandten Stirnseite (36) des Gleitrings (10) führt.

5. Endquerdichtung nach Anspruch 2 oder 3, dadurch gekennzeichnet, daß der Gleitring (10) mehrere in Umfangsrichtung aufeinanderfolgende Kammern (19,19,...) aufweist und ein gegen die Gleitfläche (9) offener Kanal (32) von der Nut (30) ausgehend radial nach innen bis zur Niederdruckseite führt.

## Claims

1. An end transverse seal for a controlled deflection roll (100),
having a rotating shell (2) effective as the operative periphery (3) of the roll and a non-rotating beam (1) which extends through the shell (2) over the length thereof and at a distance from its inner periphery (4),
and hydraulic support means which act on the shell inner periphery (4) and are disposed on the beam (1),
one end transverse seal (8, 10) being disposed at each end of the shell (2) and sealing off from the outside the high-pressure gap (20) between the shell (2) and the beam (1),
and being embodied by a floating ring seal whose floating ring (10), the same being disposed in a plane perpendicular to the axis of the shell (100) and being movable in the direction of the latter axis, has at least one chamber (19) which is open towards an inwardly facing rubbing surface (9) corotating with the shell (2), extends in the peripheral direction and is closed in every direction parallel to the plane perpendicular to the roll axis, pressure liquid from the gap (20) between the shell (2) and the beam (1) having access to the chamber (19),
characterised in that
a groove (30) which extends over the extent of the end transverse seal (8, 10) in the peripheral direction and is open towards the rubbing surface (9) is provided in the floating ring (10) radially outside the chamber (19) and communicates with the low-pressure side.

2. A seal according to claim 1, characterised in that the floating ring (10) engages by way of an outer axial closed peripheral projection (12) over a diameter step (11) of the beam (1) and there are disposed below the extension (12) a peripheral groove (13) in the beam (1), on the base of the groove an O-ring (14) and thereabove a ring (15) which fills up the width of the groove (13), engages sealingly with the inner periphery (16) of the projection (12) and is made of a low-friction material.

3. A seal according to claim 2, characterised in that the ring (15) is made of polytetrafluoroethylene.

4. A seal according to claim 2 or 3, characterised in that the floating ring (10) has its end face (36) remote from the surface (9) at an axial distance from the diameter step (11) and has its inner periphery (37) at a radial distance from the adjacent zone of the beam (1) and a duct (26) extends from the groove (30) to the floating ring end face (36) facing the diameter step (11).

5. A seal according to claim 2 or 3, characterised in that the floating ring (10) has a number of peripherally consecutive chambers (19, 19, ...) and a duct (32) which is open towards the surface (9) and which, starting from the groove (30), extends radially inwards as far as the low-pressure side.

## Revendications

1. Etanchement transversal final pour un rouleau (100) de flexion commandable comportant :
- un rouleau creux (2) tournant formant la périphérie de travail du rouleau (3) et une pièce d'entretoisement (1) fixé en rotation pénétrant le rouleau sur sa longueur, laissant un intervalle tout autour du pourtour intérieur (4) du rouleau creux (2) et
- un dispositif d'appui hydraulique agissant contre le pourtour intérieur (4) du rouleau creux (2), disposé sur la pièce d'entretoisement (1),
l'étanchement transversal final (8, 10) est placé respectivement à une extrémité du rouleau creux (2) et rend étanche l'espace intermédiaire (20) entre rouleaux creux (2) et pièce d'entretoisement (1) contre la pression s'exerçant à cet endroit vers l'extérieur,
et il est constitué par une garniture d'étanchéité en anneau de glissement dont l'anneau de glissement (10) mobile dans le sens de l'axe, placé dans un plan perpendiculaire à l'axe du rouleau (100), présente au moins une chambre (19) ouverte contre une surface de glissement (9) qui tourne avec l'arbre creux (2) et est tournée vers l'intérieur, se développant dans le sens de la périphérie, fermée dans chaque direction parallèle au plan perpendiculaire à l'axe du rouleau (100), a accès au liquide sous pression à partir de l'espace intermédiaire (20) situé entre le rouleau creux (2) et la pièce d'entretoisement (1), caractérisé en ce qu'il a été prévu dans l'anneau de glissement (10) radialement en dehors de la chambre (19) une rainure (30) ouverte contre la surface de glissement (9), se développant dans le sens de la périphérie sur l'étendue de l'étanchement transversal final (8, 10), rainure qui est en liaison avec le côté basse pression.

2. Etanchement transversal final selon la revendication 1, caractérisé en ce que l'anneau de glissement (10) recouvre avec une partie en saillie (12) axiale, extérieure, fermée et rotative un gradin du diamètre (11) de la pièce d'entretoisement (1) et en-dessous de la pièce en saillie (12) est disposée une rainure périphérique (13) de la pièce d'entretoisement (1), sur le fond de laquelle se trouve un anneau torique (14) et par dessus un anneau (15) en un matériau facilitant le glissement, remplissant la largeur de la rainure (13) et se plaçant de façon étanche contre le pourtour intérieur (16) de la partie en saillie (12).

3. Etanchement transversal final selon la revendication 2, caractérisé en ce que l'anneau (15) est composé de polytétrafluoréthylène.

4. Etanchement transversal final selon les revendications 2 ou 3, caractérisé en ce que l'anneau de glissement (10) laisse un intervalle axial entre sa surface frontale (36) éloignée de la surface de glissement (9) et du gradin de diamètre (11) et un intervalle radial entre son pourtour intérieur (37) et la zone voisine de la pièce d'entretoisement (1) et un canal (26) va de la rainure (30) à la face frontale (36) de l'anneau de glissement (10) tournée vers le gradin de diamètre (11).

5. Etanchement transversal final selon les revendications 2 ou 3, caractérisé en ce que l'anneau de glissement (10) a plusieurs chambres (19, ...) et un canal (32) ouvert vers la surface de glissement (9) partant radialement de la rainure (30) va vers l'intérieur jusqu'au côté basse pression.
